Europäisches Patentamt

European Patent Office

Office européen des brevets

(19)

(11) Publication number: **0 080 736**
**A1**

## (12) EUROPEAN PATENT APPLICATION

(21) Application number: 82111080.6

(22) Date of filing: 01.12.82

(51) Int. Cl.³: **G 01 C 21/14**
**G 01 C 21/22**

(30) Priority: 02.12.81 JP 192855/81

(43) Date of publication of application:
08.06.83 Bulletin 83/23

(84) Designated Contracting States:
DE FR GB

(71) Applicant: Hitachi, Ltd.
5-1, Marunouchi 1-chome
Chiyoda-ku Tokyo 100(JP)

(72) Inventor: Igarashi, Isamu
46-2, Horiguchi
Katsuta-shi Ibaraki-ken(JP)

(72) Inventor: Watanabe, Shigehisa
334, Bouda Apt. 2593, Takaba
Katsuta-shi Ibaraki-ken(JP)

(74) Representative: Patentanwälte Beetz sen. - Beetz jun.
Timpe - Siegfried - Schmitt-Fumian
Steinsdorfstrasse 10
D-8000 München 22(DE)

(54) Position display device for a vehicle.

(57) Position display device includes a direction sensor (1) detecting the direction of motion of the vehicle, a distance sensor (2) detecting the distance travelled thereof and a tilt sensor (3) detecting the angle of tilt of the plane of motion. A microprocessor (5) calculates the changes in position of the vehicle on the basis of detection signals delivered from each of the sensors and delivers data on the movement of the vehicle. A display unit (7) display the position of the vehicle on it's screen.

FIG. 1

EP 0 080 736 A1

TITLE OF THE INVENTION

Position Display Device for a Vehicle

BACKGROUND OF THE INVENTION

The present invention relates to a position display device, and particularly to a position display device for a vehicle in motion such as an automobile which displays the movement of the vehicle on a screen.

In recent years, a demand has risen for a device which provides the driver of a vehicle such as an automobile moving toward a destination with information on his driving which will serve as a guide for his driving, such as in what positional relationship said vehicle is in with its destination, and in what direction it should be driven so that it can reach the destination quickly and easily.

One of such devices is a navigation meter mounted on an automobile the like, which provides displayed information on the current direction of motion of said vehicle and on the distance remaining to be covered for it to reach its destination, etc.

However, this device wherein the positional relationship between the current position and the destination is simply displayed as the distance remaining is inconvenient in that the driver can not easily determine the best way of reaching his destination, since he does not known his position properly.

SUMMARY OF THE INVENTION

The purpose of the present invention is to furnish a position display device for a vehicle in motion which enables the intvitive recognition of the mutual positional relationship between the current position and the destination of a vehicle in motion.

The present invention is to enable the intuitive recognition of the mutual positional relationship between the current position and the destination and recognition of the course covered up to the current position by constructing a position display device for a vehicle in motion in such a manner that it is proviied with an input unit through which data on the position of the vehicle's destination with respect to its starting point can be input, a direction sensor detecting the direction of motion of the vehicle, a distance sensor detecting the angle of tilt of the plane of motion, a microprocessor calculating the changes in position of the vehicle in terms of two or more different preset fixed intervals on the basis of detection signals delivered from each of the sensors and delivering data on the movement of the vehicle, a memory storing the data on the position of the destination and also the data on the movement of the vehicle sequentially in separate places, and with a display unit having a screen composed of picture elements arranged in the form of dot matrix reading out and displaying the contents of the memory concerning the destination selected by an instruction to the microprocessor on said screen in a sequence.

BRIEF DESCRIPTION OF THE DRAWINGS

Fig. 1 shows a block diagram of the complete configuration of one embodiment of the complete configuration of one embodiment of the present invention;

Fig. 2 shows a diagram of the construction of a direction sensor used in the embodiment of Fig. 1;

Fig. 3 shows a detailed diagram showing the configuration of the display unit of the embodiment of Fig. 1;

Fig. 4 is a drawing showing how the data on the vehicle's path is stored in the memory ; and

Figs. 5A and 5B are drawings illustrating the display.

DETAILED DESCRIPTION OF THE PREFERRED EMBODIMENT

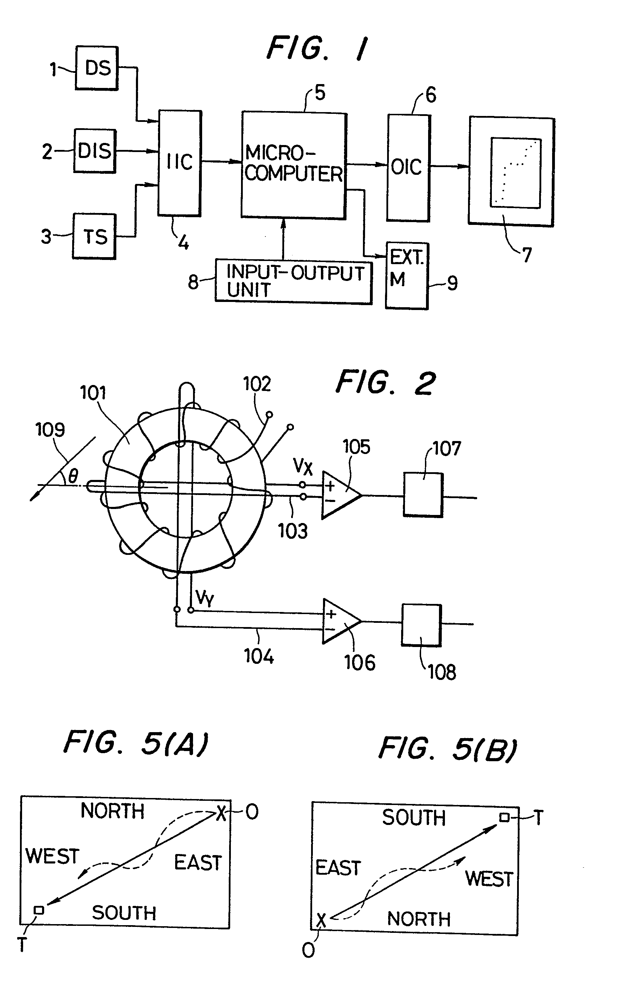

As shown in Fig. 1, a direction sensor 1 detecting the direction of motion of a vehicle or the like, a distance sensor 2 detecting the distance travelled by the vehicle and a tilt sensor 3 detecting the angle of tilt of the plane of motion are all connected to a microcomputer 5 consisting of a microprocessor and a memory through the intermediary of an input interface circuit 4. The microcomputer 5 is connected to a dot-matrix type of display unit 7 through the intermediary of an output interface circuit 6. An input-output unit 8, including a keyboard, and an external memory 9 are connected to the microcomputer 5. This external memory 9 and the memory inside the microcomputer 5 are such the contents of the memory can be read out from cells with specific addresses by the microprocessor. The direction sensor 1 is constructed, as shown in Fig. 2, by an excitation coil 102 having an appropriate number of windings provided around the periphery of a toroidal core 101, with two coils X103 and Y104 perpendicular to each other wound around the outside of the toroidal core 101, the coils X103 and Y104 being connected to DC converters 107 and 108 through the intermediary of amplifiers 105 and 106 respectively, and with an alternating supply source connected to the excitation coil 102, and this direction sensor 1 is mounted in a vehicle with the coil X103 aligned in the east-west direction, and the coil Y104 in the north-south direction.

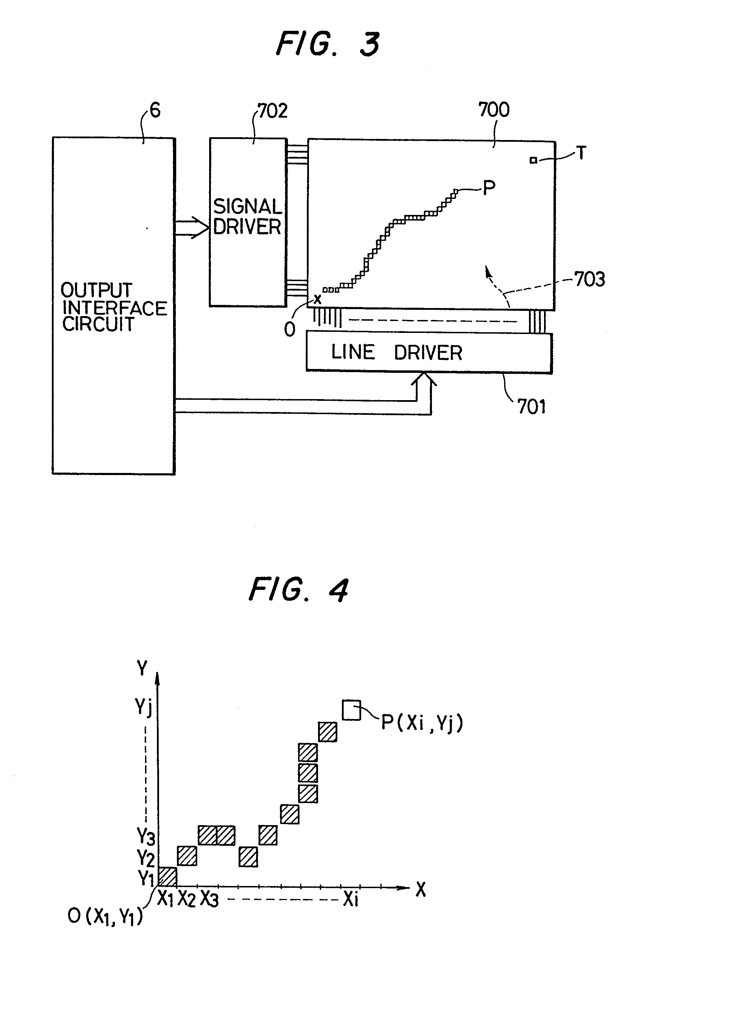

The screen 700 of the display unit 7, consists of a dot matrix made up of liquid crystal display elements, as shown in Fig. 3, the vertical axis of the screen being the scanning direction, the scanning lines driven by a line driver 701, and the horizontal axis being the signal direction, the signal lines driven by a signal dirver 702. The line driver 701 and the signal driver 702 are connected to the microcomputer 5 as said above through the output interface 6.

The operation of the embodiment thus constituted is described below.

The operation of the direction sensor 1 of Fig. 2 detecting the direction of motion is as follows. When an alternating voltage is applied to the excitation coil 102, a secondary voltage is induced in the coils X103 and Y104, that in X103 being the X component, and that in Y104 being the Y component. Now suppose that a geomagnetism of H gauss, at an angle $\theta$ to the coils exists in the direction shown by the arrow 109 in Fig. 2, the output voltages $V_X$ and $V_Y$ of coil X and coil Y respectively become those given by the formulas (1) and (2):

$$V_X \propto H \cos \theta \qquad \dots\dots\dots \dots\dots\dots\dots\dots (1)$$

$$V_Y \propto H \sin \theta \qquad \dots\dots\dots\dots\dots\dots\dots\dots (2)$$

According to these formulas, the angle $\theta$ is expressed by the following formula (3):

$$\theta = \tan^{-1} \frac{V_Y}{V_X} \qquad \dots\dots\dots\dots\dots\dots\dots\dots (3)$$

Accordingly, by finding the angle according to the above formula (3), the direction of motion of the vehicle can be detected with respect to the direction of the earth's magnetism. Since the AC signals delivered from the coil X103 and the coil Y104 are weak, these signals are amplified by the amplifiers 105 and 106 respectively and converted into DC signals suitable for signal processing by the DC converters 107 and 108 so as to be input to the input interface circuit 4.

Now we return to Fig. 1 to explain the operation of the whole device.

At the start of a journey, the driver inputs the position of his destination is, for instance $X_0$ km east and $Y_0$ km north from the starting point, into the microcomputer 5 by means of the input-output unit 8.

While the vehicle is moving pulse signals in accordance with the distance covered are delivered from the distance sensor 2, and analog signals in accordance with the angle of tilt $\psi$ of the plane of motion are delivered from the tilt sensor 3. The outputs of the sensors are input to the microcomputer 5, the outputs of the direction sensor 1 and the tilt sensor 3 being first converted digitally in the input interface 4.

The following operations are conducted in the microcomputer 5.

First the pulses from the distance sensor 2 are counted and thereby the distance covered is calculated. Next, based on this distance and the signal from the tilt sensor 3, the horizontal component of the distance is calculated. That is, when the infinitesinal distance covered along the plane of motion is $d_0$, the horizontal component of the distance covered is $d_H$ and the tilt angle is $\psi$ for instance, the horizontal component of the distance covered $d_H$ is expressed by the following formula (4):

$$d_H = d_0 \cos \psi \quad \ldots\ldots\ldots\ldots\ldots\ldots\ldots\ldots\ldots\ldots\ldots\ldots (4)$$

The distance covered $d_H$ thus obtained is added continuously and, for each unit of the distance covered d being a little longer than $d_H$, for instance, for each unit of 1m or 2m, the distance covered in the X direction and the Y direction are calculated according to the formulas (5) and (6) below. These distances are added sequentially, and the total distance covered X in the X direction and the total distance covered Y in the Y direction from the starting point are calculated. In the formulas, $V_{Xk}$ and $Y_{Xk}$ are the output signals from the direction sensor for the distance covered d.

$$X = \sum_{k\alpha 1}^{k} d \frac{V_{Xk}}{\sqrt{V\times k^2 + V_{Yk}^2}} \quad \dots\dots\dots\dots\dots\dots \quad (5)$$

$$Y = \sum_{k=1}^{k} d \frac{V_{Yk}}{\sqrt{V\times k^2 + V_{Yk}^2}} \quad \dots\dots\dots\dots\dots\dots \quad (6)$$

The values X calculated according to formula(s) are stored in the internal memory of the microcomputer 5 or in the external memory 8 as sequential intervals $X_i$ $(i = 1 \sim i)$ in two or more unit distances $S_1$ and $S_2$ in the X direction set beforehand, e.g. for $S_1 = 100$ m and $S_2 = 1$ km, while the values corresponding to the total distance covered Y in the Y direction at the same time, which are calculated according to formula (6), are also stored therein based on the interval $Y_j$ $(j = 1 \sim j)$ in the Y direction using the same unit distances $S_1$ and $S_2$, where the interval $Y_j$ in the Y direction varies with respect to the interval $X_i$. These values $X_i$ and $Y_j$ are stored in the memory in pairs, as shown in Fig. 4, in cells with addresses prescribed so as to indicate the vehicle's movement from the starting point 0 $(X_1, Y_1)$ to its current position P $(X_i, Y_j)$. The unit distances $S_1$ and $S_2$ in the X direction correspond to a so-called reduced scale, and when stored in the memory, they are stored at separate places

$A_1$ and $A_2$, respectively.

The data on the vehicle's path stored in the memory is displayed on the display unit 7 according to the instructions of the microcomputer 5. The microprocessor of the microcomputer 5 delivers a periodical signal to the line driver 701 shown in Fig. 3 and simultaneously, in synchronization therewith, specifies the address of $X_i$ in the memory, reads out the value of $Y_j$ corresponding to $X_i$ and delivers this signal to the signal driver 702. Based on this signal, the vertical axis of the screen 700 of the display unit 7 is scanned by $X_i$ and the picture element corresponding to the signal $Y_j$ input along the horizontal axis is illuminated. In this way, the data on the vehicle's movement stored in the memory is displayed as a chart on the screen 700 of the display unit 7, and the position of the destination T is indicated on the screen simultaneously.

In addition, the visibility of the picture element indicating the current position P is increased by being flashed.

When the distance to be travelled is small, that is, when there is only a short distance between the starting point and the destination or when the vehicle comes close to the destination, the data is changed to the data $(X_i, Y_j)$ memorized in $A_1$ through the calculation based on the above unit distance $S_1$, and these are read out and displayed, whereby the vehicle's path is displayed on the screen at an enlarged scale.

If the points of the compass are fixed on the screen when the vehicle's movement is displayed, the direction of motion is towards the bottom of the screen when the vehicle travels from the starting point O toward a destination T in the south, as shown in Fig. 5 (A), which could seem rather unnatural to the driver when driving. In this case, the display is altered so that the displayed position of the destination T is located above that of the starting point O on the screen by shifting the orientation of the screen as shown in Fig. 5 (B). That is, the scanning direction of the line driver 701 and the input signal sequence of the signal dirver 702 are reversed according to the instructions of the microprocessor. This means that the top of the screen is north when the destination input via the input-output unit is "$Y_0$ km to the north", and is south when the destination is "$Y_0$ km to the south", and in accordance with this operation, the sequence of the read-out of the memory is controlled.

The current direction of motion is displayed on the screen 700 by an arrow 703 as shown in Fig. 3 or something similar.

Accordingly, this embodiment of the present invention has the effect that the mutual positional relation drip between the current position and the destination can be understood intuitively, since the path of the vehicle from its starting point to the current position thereof, as well as its destination, is displayed on a chart.

In addition, the device can be made to have a visibility which is excellent from the biotechnological viewpoint, since the position of the destination on the chart is displayed above that of the starting point at all times and since the direction of motion of the vehicle is indicated on the chart by an arrow.

Moreover, since the positional relation ship between the vehicle's movement up to the current position displayed on the chart can be enlarged and thus the visibility is improved remarkably, the driver can devote himself to driving without referring to a road map or the like, which makes it easier for him to reach his destination.

Furthermore, it is possible to provide an alarm unit, such as a buzzer or a chime, attached to the device and to make the alarm unit sound when the vehicle approaches the destination, and thereby make it possible to let the driver know that he is approaching his destination without him having to watch the screen of the display unit and thus attract his attention from the driving.

With this embodiment, checkpoints could be provided and displayed as appropriate on the route from the starting point to the destination, and the travel could be done using each of these checkpoints as a guide, whereby the easy arrival at the destination can be made without losing the way.

As explained above, the present invention enables the driver to know intuitively the mutual positional relationship between the current position and the destination of the vehicle, and can make a device with excellent visibility.

Claims

1. A position display device for a vehicle, c h a r a c t e r i z e d   b y
    an input unit (8) through which data on the location of the vehicle's destination with respect to its starting point is supplied;
    a direction sensor (1) detecting the direction of motion of said vehicle;
    a distance sensor (2) detecting the distance travelled thereof;
    a tilt sensor (3) detecting the angle of tilt of the plane of motion;
    a microprocessor (5) calculating the changes in the position of said vehicle on the basis of detecting signals delivered from each of said sensors (1, 2, 3) and delivering data on the movement of said vehicle;
    a memory (9) storing the location of said destination and said data on the vehicle's movement sequentially; and
    a display unit (7) having a screen including picture elements arranged in the form of a matrix reading out and displaying the contents of said memory on said screen according to instructions from said microprocessor (5). [Fig. 1]

2. A position display device for a vehicle according to claim 1,
    wherein said direction sensor is characterized by a toroidal core (101), an excitation coil (102) wound on said toroidal core, two detecting coils (103, 104) wound on said toroidal core and perpendicular to each other, two D.C. converters (107, 108) connected to said detecting coils, two amplifiers (105, 106) connected to each converter, and an alternating current supply source connected to said excitation coil. [Fig. 2]

3. A position display device for a vehicle according to claim 1,
   wherein said microprocessor calculates the changes in position of said vehicle in terms of at least two different preset fixed intervals on the basis of detection signals.

4. A position display device for a vehicle according to claim 1,
   wherein said display unit (7) includes a dot matrix type liquid crystal display (700, 701, 702).

0080736

## FIG. 1

## FIG. 2

## FIG. 5(A)          FIG. 5(B)

## FIG. 3

OUTPUT
INTERFACE
CIRCUIT

SIGNAL
DRIVER

LINE DRIVER

## FIG. 4

European Patent
Office

**EUROPEAN SEARCH REPORT**

**0080736**
Application number

EP 82 11 1080

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| Y | DE-A-2 910 386 (TELDIX) *Pages 6,7* | 1,4 | G 01 C 21/14<br>G 01 C 21/22 |
| Y | CONTROL ENGINEERING, vol. 9, no. 3, March 1962, pages 115,117, New York (USA); L.A.MILLER: "Land navigation system tells driver where to go". *Page 115, column 2, lines 11-19* | 1 | |
| A | GB-A-2 056 686 (SPERRY) *Page 1, line 99 - page 2, line 104* | 2 | |
| A | FR-A-2 470 362 (HONDA) *Page 8, lines 8-22* | 1,3 | |
| A | US-A-4 139 889 (G.W.INGELS) *Column 3, lines 47-52* | 1,3 | TECHNICAL FIELDS SEARCHED (Int. Cl ³) |
| A | GB-A-2 042 181 (NIPPON TELEGRAPH AND TELEPHONE) *The whole document* | 1 | G 01 C 21/04<br>G 01 C 21/08<br>G 01 C 21/10<br>G 01 C 21/12<br>G 01 C 21/14<br>G 01 C 21/22<br>G 01 C 17/30 |

The present search report has been drawn up for all claims

| Place of search THE HAGUE | Date of completion of the search 10-03-1983 | Examiner DE BUYZER H.J. |
|---|---|---|

EPO Form 1503 03.82